# EUROPÄISCHE PATENTSCHRIFT

(11) **EP 2 923 787 B1**
(45) Veröffentlichungstag und Bekanntmachung des Hinweises auf die Patenterteilung: **26.09.2018**
(21) Anmeldenummer: 15159765.5
(22) Anmeldetag: 19.03.2015
(51) Int. Cl.: B23B 51/10

(54) **Werkzeuganordnung und Verfahren zum Entgraten**
TOOL ASSEMBLY AND METHOD FOR DEBURRING
AGENCEMENT D'OUTIL ET PROCÉDÉ D'ÉBAVURAGE

(30) Priorität: 27.03.2014 DE 102014104325
(43) Veröffentlichungstag der Anmeldung: 30.09.2015
(73) Patentinhaber: MAS GmbH, 71229 Leonberg (DE)
(72) Erfinder: Mörk, Thomas, 71272 Renningen (DE); Bölke, Uwe, 71737 Kirchberg/Murr (DE)
(74) Vertreter: Witte, Weller & Partner Patentanwälte mbB

(56) Entgegenhaltungen:
- EP-A2- 0 291 563
- DE-A1- 1 552 248
- DE-A1- 4 103 190
- DE-U1- 9 016 440
- FR-A1- 2 671 995
- US-A- 2 628 513

## Beschreibung

Die vorliegende Erfindung betrifft eine Werkzeuganordnung zum spanenden Bearbeiten von axial gegenüberliegenden Umfangsrändern einer Bohrung in einem Werkstück, mit einem Schaftabschnitt, der entlang einer Längsachse ausgerichtet ist und dessen Querschnitt dem Querschnitt der Bohrung entspricht, so dass der Schaftabschnitt mit Spiel durch die Bohrung hindurchführbar ist, wobei der Schaftabschnitt mittels eines Drehantriebs in einer Drehrichtung antreibbar ist.

Ferner betrifft die vorliegende Erfindung ein Verfahren zum Bearbeiten eines Umfangsrandes einer Bohrung in einem Werkstück, insbesondere mittels einer Werkzeuganordnung der oben genannten Art.

Auf dem Gebiet der spanenden Bearbeitung von Werkstücken ist es bekannt, den Umfangsrand einer Bohrung zu bearbeiten. Dies kann zum Zwecke eines Entgratens erfolgen. In manchen Fällen ist es jedoch auch wünschenswert, den Umfangsrand mit einer definierten Fase zu versehen, um beispielsweise ein Einführen von Werkstücken in die Bohrung bei einem späteren Montageverfahren zu vereinfachen.

Bei Werkstücken, die eine Durchgangsbohrung aufweisen, ist es hierbei häufig notwendig, sowohl den Umfangsrand der einen axialen Seite der Bohrung als auch den Umfangsrand der anderen axialen Seite der Bohrung zu bearbeiten. Dies kann entweder dadurch erfolgen, dass zunächst der eine Umfangsrand der Durchgangsbohrung bearbeitet wird, das Werkstück anschließend gewendet wird, und schließlich der andere Umfangsrand der Durchgangsbohrung bearbeitet wird.

Die FR 2 671 995 A1 offenbart eine Werkzeuganordnung gemäß dem Oberbegriff des unabhängigen Anspruchs 1 sowie ein Verfahren zum Bearbeiten eines Umfangsrandes einer Bohrung in einem Werkstück, mit den Schritten:
- Bereitstellen einer Werkzeuganordnung, die einen durch die Bohrung hindurchführbaren Schaftabschnitt und ein an einer Stirnseite des Schaftabschnittes exzentrisch verschwenkbares Schneidwerkzeug aufweist;
- Bewegen der Werkzeuganordnung auf das Werkstück zu, und zwar so, dass eine Längsachse des Schaftabschnittes mit einer Längsachse der Bohrung zusammenfällt;
- Verschwenken des Schneidwerkzeuges in eine mit dem Schaftabschnitt im Wesentlichen fluchtende Position;
- Hindurchführen des Schaftabschnittes durch die Bohrung, bis das Schneidwerkzeug aus der Blindseite der Bohrung heraustritt;
- Verschwenken des Schneidwerkzeuges in eine exzentrische Bearbeitungsposition und Drehantreiben des Schaftabschnittes;
- Bearbeiten eines blindseitigen Umfangsrandes der Bohrung, indem die Werkzeuganordnung entgegen der Durchführungsrichtung bewegt wird.

Da dieses Verfahren zeit- und kostenaufwändig ist, sind Werkzeuganordnungen bekannt, die die Bearbeitung beider Umfangsränder einer Durchgangsbohrung von einer Seite aus ermöglichen, die im Folgenden die Sichtseite genannt wird, wohingegen die der Sichtseite abgewandte Seite als Blindseite bezeichnet wird.

Derartige Werkzeuganordnungen weisen generell einen Schaftabschnitt auf, der durch die Bohrung hindurchführbar ist. An dem Schaftabschnitt ist ein Schneidwerkzeug verschwenkbar gelagert. In manchen Fällen wird das Werkzeug ausschließlich aufgrund von Fliehkräften bei einem Drehantrieb des Schaftabschnittes in eine Bearbeitungsposition bewegt. Andere Konzepte beinhalten radial elastische Schaftabschnitte (z.B. gabelförmig). Auch ist es bekannt, durch Drehrichtungsumkehr ein Ein- und Ausklappen eines solchen Werkzeugs zu realisieren.

Die bislang bekannten Werkzeuganordnungen sind jedoch entweder konstruktiv aufwändig und folglich teuer. Oder sie ermöglichen es nicht, dass eine definierte Fase erzeugt wird, insbesondere dann, wenn die Relativlage zwischen Schaftabschnitt und Schneidwerkzeug allein aufgrund von Fliehkräften eingerichtet wird. Denn hierbei spielen die entgegen der Fliehkraft gerichteten Kräfte während des Schneideingriffs an dem Werkstück eine Rolle, die dazu führen, dass eine definierte Fase nicht erzeugbar ist.

Es ist vor diesem Hintergrund eine Aufgabe der Erfindung, eine verbesserte Werkzeuganordnung sowie ein verbessertes Verfahren anzugeben, wobei insbesondere einer der oben genannten Nachteile überwunden wird.

Die obige Aufgabe wird zum einen gelöst durch eine Werkzeuganordnung gemäß dem Anspruch 1 zum spanenden Bearbeiten von axial gegenüberliegenden Umfangsrändern einer Bohrung, insbesondere einer Durchgangsbohrung, in einem Werkstück, mit einem Schaftabschnitt, der entlang einer Längsachse ausgerichtet ist und dessen Querschnitt dem Querschnitt der Bohrung entspricht, so dass der Schaftabschnitt mit Spiel durch die Bohrung hindurchführbar ist, wobei der Schaftabschnitt eine Stirnseite aufweist, die quer zu der Längsachse ausgerichtet ist, und mit einem Schneidwerkzeug, das im Bereich eines Umfanges eine Bearbeitungsschneide aufweist und das an der Stirnseite des Schaftabschnittes um eine Verschwenkachse zwischen einer Bearbeitungsposition und einer Durchführungsposition verschwenkbar ist, wobei die Verschwenkachse radial versetzt zu der Längsachse angeordnet ist, derart, dass das Schneidwerkzeug in der Durchführungsposition im Wesentlichen mit dem Schaftabschnitt ausgerichtet ist und dass die Bearbeitungsschneide in der Bearbeitungsposition radial gegenüber dem Schaftabschnitt vorsteht.

Die Bohrung ist insbesondere eine Durchgangsbohrung. Die Bohrung ist ferner im Querschnitt vorzugsweise kreisförmig. Der Schaftabschnitt ist ebenfalls vorzugsweise im Querschnitt kreisförmig.

Der Schaftabschnitt ist vorzugsweise mittels eines Drehantriebs in einer Drehrichtung antreibbar. Der Drehantrieb muss vorzugsweise nur dazu ausgelegt sein, den Schaftabschnitt in einer Drehrichtung (Schneidrichtung) anzutreiben. Die Werkzeuganordnung könnte jedoch auch stehend (nicht rotierend) betrieben werden. Hierbei rotiert vorzugsweise ein Werkstück in Bezug auf die Werkzeuganordnung.

Die Stirnseite ist vorzugsweise senkrecht zu der Längsachse ausgerichtet, und das Schneidwerkzeug ist ein plattenförmiges Schneidwerkzeug, das in der axialen Draufsicht vorzugsweise im Wesentlichen ebenfalls eine Kreisform besitzt, die an den Querschnitt des Schaftabschnittes angepasst ist.

Das Schneidwerkzeug kann ein Schneidwerkzeug mit einem Grundkörper aus einem Basismaterial, insbesondere einem metallischen Basismaterial sein, mit dem wenigstens ein Einsatz verbunden ist, an dem die Bearbeitungsschneide ausgebildet ist. Der Einsatz ist hierbei vorzugsweise aus einem Schneidwerkstoff wie Hartmetall, Cermet, etc. ausgebildet. Das Schneidwerkzeug kann jedoch auch einstückig aus einem derartigen Schneidstoff hergestellt sein. Das Schneidwerkzeug kann in jenem Umfangsbereich, der in der Bearbeitungsposition radial gegenüber dem Schaftabschnitt vorsteht, eine einzelne Bearbeitungsschneide aufweisen, kann jedoch in diesem Umfangsbereich auch mehrere Bearbeitungsschneiden aufweisen, die in Umfangsrichtung versetzt zueinander angeordnet sind. Jede folgende Bezugnahme auf eine Bearbeitungsschneide kann insoweit sich auch auf eine Mehrzahl von Bearbeitungsschneiden beziehen.

Die Verschwenkachse ist vorzugsweise parallel zu der Längsachse ausgerichtet. Zwischen dem Schaftabschnitt und dem Schneidwerkzeug sind vorzugsweise Anschläge vorgesehen, die das Verschwenken des Schneidwerkzeuges in Bezug auf den Schaftabschnitt begrenzen, und zwar zwischen der Bearbeitungsposition und der Durchführungsposition. Der hierbei von dem Schneidwerkzeug um die Verschwenkachse herum überstrichene Drehwinkel liegt vorzugsweise in einem Bereich von 5° bis 90°, insbesondere in einem Bereich von 5° bis 40°, und besonders bevorzugt in einem Bereich von 5° bis 25°, insbesondere in einem Bereich von 10° bis 20°.

Mit der erfindungsgemäßen Werkzeuganordnung kann der Schaftabschnitt mit seiner Stirnseite voraus in die Bohrung eingeführt werden, wobei sich das Schneidwerkzeug in der Durchführungsposition befindet. Sobald das Schneidwerkzeug auf der Blindseite aus der Bohrung ausgetreten ist, kann das Schneidwerkzeug in die Bearbeitungsposition versetzt werden. Anschließend kann die Bearbeitung des blindseitigen Umfangsrandes der Bohrung erfolgen.

Demzufolge betrifft die vorliegende Erfindung gemäß einem weiteren Aspekt ein Verfahren gemäß dem Anspruch 9 zum Bearbeiten eines Umfangsrandes einer Bohrung in einem Werkstück, insbesondere mittels einer Werkzeuganordnung der oben genannten Art, mit den Schritten: Bereitstellen einer Werkzeuganordnung, die einen durch die Bohrung hindurchführbaren Schaftabschnitt und ein an einer Stirnseite des Schaftabschnittes exzentrisch verschwenkbares Schneidwerkzeug aufweist; Bewegen der Werkzeuganordnung auf das Werkstück zu, und zwar so, dass eine Längsachse des Schaftabschnittes mit einer Längsachse der Bohrung zusammenfällt, ohne hierbei die Werkzeuganordnung in einer Drehrichtung anzutreiben; Verschwenken des Schneidwerkzeuges in eine mit dem Schaftabschnitt im Wesentlichen fluchtende Position (Durchführungsposition), und zwar aufgrund eines Kontaktes zwischen einem radial gegenüber dem Schaftabschnitt vorstehenden Umfangsabschnitt des Schneidwerkzeuges und einem sichtseitigen Umfangsrand der Bohrung; Hindurchführen des Schaftabschnittes durch die Bohrung, bis das Schneidwerkzeug aus der Blindseite der Bohrung heraustritt; Verschwenken des Schneidwerkzeuges in eine exzentrische Bearbeitungsposition und Drehantreiben des Schaftabschnittes; Bearbeiten eines blindseitigen Umfangsrandes der Bohrung, indem die Werkzeuganordnung entgegen der Durchführungsrichtung bewegt wird; und Beenden des Drehantriebs des Schaftabschnittes.

Das Schneidwerkzeug ist insbesondere in jenem Umfangsbereich, der in der Bearbeitungsposition radial gegenüber dem Schaftabschnitt vorsteht, so geformt, dass ein Kontakt zwischen diesem Umfangsabschnitt und einem sichtseitigen Umfangsrand der Bohrung dazu führt, dass das Schneidwerkzeug radial nach innen verschwenkt wird, und zwar in die Durchführungsposition.

Besonders bevorzugt ist es, wenn das Schneidwerkzeug in diesem Umfangsabschnitt ferner so ausgebildet ist, dass es nach Abschluss des erfindungsgemäßen Verfahrens wieder in die Durchführungsposition versetzt wird, wenn der Umfangsabschnitt mit dem blindseitigen Umfangsrand der Bohrung in Kontakt kommt, während der Schaftabschnitt zur Sichtseite hin aus der Bohrung herausgezogen wird.

Es ist bei dem erfindungsgemäßen Verfahren jeweils bevorzugt, wenn das Hindurchführen der Stirnseite des Schaftabschnittes mit dem daran verschwenkbar gelagerten Schneidwerkzeug erfolgt, während der Schaftabschnitt nicht drehangetrieben wird. Bei dem Hindurchführen könnte der Schaftabschnitt jedoch auch gegen die Schneidrichtung drehend angetrieben werden.

Generell ist es auch denkbar, auf die erfindungsgemäße Art und Weise Umfangsränder einer Bohrung im Bereich einer Radialnut zu bearbeiten, die in axialer Richtung zwischen dem blindseitigen und dem sichtseitigen Umfangsrand einer Durchgangsbohrung angeordnet ist, oder zwischen einem sichtseitigen Umfangsrand und einem Boden einer Sackloch-Bohrung angeordnet ist.

Die Werkzeuganordnung kann einfach gefertigt werden. Die Anzahl der notwendigen Bauteile zur Einrichtung einer exzentrischen Verschwenkbarkeit des Schneidwerkzeuges in Bezug auf den Schaftabschnitt sind minimal. Ferner kann das erfindungsgemäße Verfahren durchgeführt werden, indem der Schaftabschnitt in einer einzigen Drehrichtung angetrieben wird. Eine Drehrichtungsumkehr ist vorzugsweise nicht erforderlich.

Die Aufgabe wird somit vollkommen gelöst.

Generell ist es zwar denkbar, dass das Schneidwerkzeug frei innerhalb vorgegebener Grenzen in Bezug auf den Schaftabschnitt verschwenkbar ist. Das Überführen des Schneidwerkzeuges der erfindungsgemäßen Werkzeuganordnung von der Durchführungsposition in die Bearbeitungsposition kann dabei beispielsweise aufgrund von Fliehkräften erfolgen.

Von besonderem Vorzug ist es jedoch, wenn die Werkzeuganordnung eine Federeinrichtung aufweist, die das Schneidwerkzeug in die Bearbeitungsposition vorspannt.

Bei dieser Ausgestaltung hat das Schneidwerkzeug, sofern es nicht gerade durch die Bohrung hindurchgeführt wird, immer eine vorgegebene Relativlage in Bezug auf den Schaftabschnitt und folglich in Bezug auf eine Bohrung, innerhalb der der Schaftabschnitt geführt wird. Demzufolge ist es möglich, mit der erfindungsgemäßen Werkzeuganordnung definierte Fasen zu erzeugen.

Die Federeinrichtung ist dabei von der Federkraft her so gewählt, dass das Schneidwerkzeug während der spanenden Bearbeitung in der Bearbeitungsposition bleibt. Zum anderen ist die Federeinrichtung so gewählt, dass sich das Schneidwerkzeug durch Kontakt mit dem Umfangsrand der Bohrung von der Bearbeitungsposition in die Durchführungsposition verschwenken lässt, wobei eine Axialkraft auf den Schaftabschnitt ausgeübt wird.

Ferner ist es bevorzugt, wenn der Umfang des Schneidwerkzeuges, der beim Verschwenken des Schneidwerkzeuges von der Durchführungsposition in die Bearbeitungsposition radial gegenüber dem Schaftabschnitt vorsteht, abgerundet ist. Dies führt dazu, dass beim Hindurchführen des Schneidwerkzeuges durch die Bohrung dieser Umfangsabschnitt zwar aufgrund der Federeinrichtung an dem Innenumfang der Bohrung anliegt. Durch eine geeignete Form, beispielsweise eine Abrundung, kann jedoch vermieden werden, dass hierbei eine Beschädigung der Innenumfangsfläche der Bohrung erfolgt. Auch die Wahl der Federkonstanten der Federeinrichtung spielt hierbei eine Rolle, die so gewählt wird, dass derartige Beschädigungen vermieden werden.

Gemäß einer weiteren bevorzugten Ausführungsform ist das Schneidwerkzeug folglich in einem Umfangsabschnitt, der in der Bearbeitungsposition gegenüber dem Schaftabschnitt radial vorsteht, so geformt, dass sich das Schneidwerkzeug durch einen Umfangsrand der Bohrung in dem Werkstück in die Durchführungsposition verschwenken lässt.

Hierbei ist vorgesehen, dass das Schneidwerkzeug plattenförmig ausgebildet ist, insbesondere mit einer quer zur Längsachse verlaufenden Werkzeugebene. Der Umfang des Schneidwerkzeuges bzw. der Durchmesser des Schneidwerkzeuges ist vorzugsweise im Bereich dieser Werkzeugebene am größten. Der Durchmesser des Schneidwerkzeuges im Bereich der Werkzeugebene, die vorzugsweise als Symmetrieebene des Schneidwerkzeuges ausgebildet ist, ist dabei vorzugsweise kleiner gleich dem Durchmesser des Schaftabschnittes. Generell ist es dabei denkbar, dass die Durchmesser des Schneidwerkzeuges im Bereich der Werkzeugebene und der Durchmesser des Schaftabschnittes im Wesentlichen gleich groß sind. Es ist jedoch auch denkbar, dass der Durchmesser des Schneidwerkzeuges deutlich kleiner ist als jener des Schaftabschnittes. Insbesondere bei Schaftabschnitten mit größeren Durchmessern (beispielsweise größer 15 mm) kann eine derartige Ausgestaltung mit deutlich unterschiedlich großen Durchmessern vorteilhaft sein, da das Schneidwerkzeug dann in Relation zu dem Schaftabschnitt kostengünstig hergestellt werden kann. Generell kann das Schneidwerkzeug in dem Bereich, der in der Bearbeitungsposition gegenüber dem Schaftabschnitt radial vorsteht, eine einzelne Bearbeitungsschneide oder mehrere Bearbeitungsschneiden aufweisen.

Bevorzugt ist es, wenn das Schneidwerkzeug sich ausgehend von der in axialer Richtung mittleren Werkzeugebene sowohl zu dem Schaftabschnitt hin als auch von dem Schaftabschnitt weg jeweils konisch verjüngt, mit geeigneten Winkeln, die beispielsweise im Bereich von 20° bis 85° liegen, vorzugsweise im Bereich von größer 35° und kleiner 85°, besonders bevorzugt in einem Bereich von 35° bis 55°.

Sofern die Winkel, mit denen sich die Konusflächen gegenüber der Werkzeugebene erstrecken, kleiner sind als 20°, wird es schwierig, das Schneidwerkzeug aufgrund eines Kontaktes mit einem Umfangsrand der Bohrung von der Bearbeitungsposition in die Durchführungsposition zu drücken. Bei größeren Winkeln können gegebenenfalls die gewünschten Bearbeitungswinkel an den Umgangsrändern nicht realisiert werden.

Gemäß einer weiteren bevorzugten Ausführungsform weist die Bearbeitungsschneide einen ersten Schneidabschnitt und einen zweiten Schneidabschnitt auf, die unter entgegengesetzten Winkeln zu einer Werkzeugebene ausgerichtet sind.

Die Winkel der Schneidabschnitte sind vorzugsweise identisch mit den Winkeln, mit denen sich das Schneidwerkzeug insgesamt von der Werkzeugebene zu den entgegengesetzten axialen Seiten hin verjüngt.

Die Winkel der Schneidabschnitte sind vorzugsweise jene Winkel, mit denen die Umfangsränder der Bohrungen zu bearbeiten sind. In vielen Fällen ist der Winkel 45°, um eine 45°-Fase zu erzeugen.

Gemäß einer weiteren bevorzugten Ausführungsform gehen der erste und der zweite Schneidabschnitt über einen abgerundeten Abschnitt ineinander über.

Auch die übrigen Umfangsabschnitte, zumindest jene, die in der Bearbeitungsposition radial gegenüber dem Schaftabschnitt vorstehen, sind vorzugsweise abgerundet, wenn das Schneidwerkzeug auf entgegengesetzten Seiten der Werkzeugebene jeweils konisch ausgebildet ist.

Hierdurch können Beschädigungen der Bohrungsfläche zwischen den Umfangsrändern vermieden werden, wenn das Schneidwerkzeug durch die Bohrung hindurchgeführt wird.

Gemäß einer weiteren bevorzugten Ausführungsform ist in dem Schneidwerkzeug ein axiales Langloch ausgebildet, das exzentrisch zu der Längsachse angeordnet ist und in das ein mit dem Schaftabschnitt verbundener Stift greift.

Das Langloch kann bei dieser Ausführungsform dazu eingerichtet sein, die Anschläge einzurichten, mit denen die Bearbeitungsposition und die Durchführungsposition einrichtbar sind. Diese Anschläge können auf diese Weise konstruktiv einfach und mit kostengünstigen Mitteln realisiert werden. Der Stift kann beispielsweise ein Schaft einer Schraube sein, die durch das Langloch hindurch in die Stirnseite des Schaftabschnittes eingeschraubt ist.

In diesem Zusammenhang ist zu ergänzen, dass die Verschwenkachse des Schneidwerkzeuges ebenfalls durch eine Schraube eingerichtet sein kann, die ein kreisrundes Loch in dem Schneidwerkzeug durchgreift und in eine Stirnseite des Schaftabschnittes eingeschraubt ist.

Bei der erfindungsgemäßen Werkzeuganordnung steht in der Bearbeitungsposition ein Umfangsbereich des Schneidwerkzeuges gegenüber dem Schaftabschnitt in radialer Richtung vor, der vorzugsweise 180° beträgt oder kleiner als 180° ist. Demzufolge verbleibt ein großer Umfangsabschnitt, der weder in der Bearbeitungsposition noch in der Durchführungsposition in radialer Richtung gegenüber dem Schaftabschnitt vorsteht.

In einer bevorzugten Ausführungsform ist dabei das Schneidwerkzeug in einem Umfangsabschnitt, der in der Bearbeitungsposition nicht gegenüber dem Schaftabschnitt vorsteht, eine weitere Bearbeitungsschneide ausgebildet, wobei das Schaftwerkzeug gewendet an der Stirnseite des Schaftabschnittes montierbar ist, so dass die weitere Bearbeitungsschneide in der Bearbeitungsposition radial gegenüber dem Schaftabschnitt vorsteht.

Bei dieser Ausführungsform ist das Schneidwerkzeug nach der Art einer Wendeplatte ausgebildet, das zwei Bearbeitungsschneiden hat, von denen jeweils eine benutzt wird. Wenn diese Bearbeitungsschneide abgenutzt ist, kann das Schneidwerkzeug gewendet werden, und zwar um eine Achse, die quer zu der Längsachse des Schaftabschnittes verläuft. Sofern auch die weitere Bearbeitungsschneide abgenutzt ist, kann das Schneidwerkzeug auf einfache Weise durch Lösen von Schrauben oder dergleichen (wie oben erwähnt) von dem Schaftabschnitt abgenommen und durch ein neues Schneidwerkzeug ersetzt werden.

Bei der Ausführungsform mit zwei Bearbeitungsschneiden ist es bevorzugt, wenn das Schneidwerkzeug zwei Langlöcher aufweist, von denen jeweils eines Anschläge für die Bearbeitungsposition und die Durchführungsposition bildet und von denen das andere eine Wirkfläche für eine Federeinrichtung bildet, die das Schneidwerkzeug in die Bearbeitungsposition vorspannt.

Hierbei kann die Federeinrichtung beispielsweise durch einen Federdrahtabschnitt gebildet sein, der in ein axiales Langloch des Schaftabschnittes eingesetzt ist und der in axialer Richtung gegenüber der Stirnseite vorsteht und sich in das andere Langloch hinein erstreckt, um auf diese Weise das Schneidwerkzeug in die Bearbeitungsposition vorzuspannen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Längsschnittansicht durch eine Ausführungsform einer erfindungsgemäßen Werkzeuganordnung;
- Fig. 2: eine axiale Draufsicht auf die Werkzeuganordnung der Fig. 1, wobei ein Schneidwerkzeug in einer Bearbeitungsposition ist;
- Fig. 2a: eine vergrößerte Schnittansicht entlang einer Linie IIa-IIa der Fig. 2;
- Fig. 3: eine der Fig. 2 vergleichbare Ansicht mit einem Schneidwerkzeug in einer Durchführungsposition;
- Fig. 4: ein Flussdiagramm eines erfindungsgemäßen Verfahrens;
- Fig. 5: eine perspektivische Ansicht einer weiteren Ausführungsform einer erfindungsgemäßen Werkzeuganordnung;
- Fig. 6: eine radiale Ansicht eines vorderen Abschnittes der Werkzeuganordnung der Fig. 5;
- Fig. 7: eine der Fig. 6 vergleichbare Ansicht mit einer Darstellung von Axiallöchern in einem Schaftabschnitt;
- Fig. 8: eine axiale Draufsicht auf die Werkzeuganordnung der Fig. 5, wobei ein Wende-Schneidwerkzeug in einer Durchführungsposition ist;
- Fig. 9: eine der Fig. 8 vergleichbare Ansicht mit dem Schneidwerkzeug in einer Bearbeitungsposition;
- Fig. 10: eine schematische Querschnittansicht eines Teils des Schaftabschnittes; und
- Fig. 11: eine schematische Längsschnittansicht durch einen vorderen Teil des Schaftabschnittes der Werkzeuganordnung der Fig. 5 bis 10.

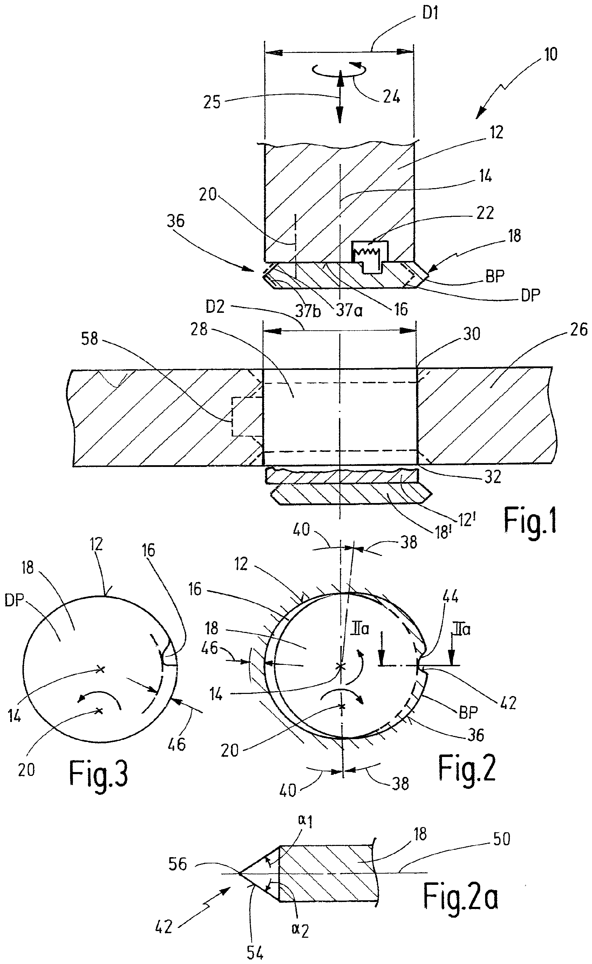

In Fig. 1 ist eine Werkzeuganordnung schematisch dargestellt und generell mit 10 bezeichnet. Die Werkzeuganordnung 10 weist einen Schaftabschnitt 12 auf, der im Querschnitt kreisförmig ist und einen Durchmesser D1 aufweist. Der Schaftabschnitt 12 ist entlang einer Längsachse 14 ausgerichtet und besitzt eine Stirnseite 16.

Ferner weist die Werkzeuganordnung 10 ein Schneidwerkzeug 18 auf. Das Schneidwerkzeug 18 ist plattenförmig ausgebildet und weist vorzugsweise ebenfalls eine Kreisform auf, die angepasst ist an die Kreisform des Schaftabschnittes 12. Das Schneidwerkzeug 18 liegt mit einer Planseite an der Stirnseite 16 an und ist gegenüber dem Schaftabschnitt 12 über eine Verschwenkachse 20 verschwenkbar, die parallel zu der Längsachse 14 ausgerichtet ist, jedoch radial gegenüber der Verschwenkachse 20 versetzt ist. Das Schneidwerkzeug 18 kann folglich in Bezug auf den Schaftabschnitt 12 exzentrisch verschwenkt werden. Genauer gesagt kann das Schneidwerkzeug 18 mittels nicht näher bezeichneter Anschlagmittel zwischen einer Bearbeitungsposition BP, die in Fig. 1 in durchgezogenen Linien gezeigt ist, und einer Durchführungsposition DP verschwenkt werden, die in Fig. 1 gestrichelt dargestellt ist. Die Werkzeuganordnung 10 weist ferner eine Federeinrichtung 22 auf, mittels der das Schneidwerkzeug 18 in die Bearbeitungsposition BP vorgespannt ist.

Der Schaftabschnitt 12 ist mittels eines Drehantriebs 24 in einer Drehrichtung antreibbar und vorzugsweise mittels eines Axialantriebs 25 entlang der Längsachse 14 versetzbar.

Fig. 1 zeigt ferner ein Werkstück 26, das eine Durchgangsbohrung 28 aufweist, die einen Durchmesser D2 besitzt. D1 ist kleiner als D2, derart, dass der Schaftabschnitt 12 mit geringem Spiel durch die Bohrung 28 hindurchführbar ist. Die Bohrung ist im Querschnitt vorzugsweise ebenfalls kreisförmig und weist auf einer ersten Axialseite (Sichtseite) einen sichtseitigen Umfangsrand 30 sowie auf der gegenüberliegenden Axialseite einen blindseitigen Umfangsrand 32 auf.

Das Schneidwerkzeug 18 weist einen Umfang 36 auf, der in einem axialen mittleren Bereich des Schneidwerkzeuges 18 einen größten Durchmesser aufweist, der kleiner gleich dem Durchmesser D1 ist. Ausgehend von diesem axialen mittleren Bereich ist das Schneidwerkzeug 18 zu dem Schaftabschnitt 12 hin und von dem Schaftabschnitt 12 weg jeweils konisch ausgebildet, mit Winkelflächen, die in Fig. 1 mit 37a, 37b bezeichnet sind.

Die Fig. 2 und 3 zeigen jeweils die Werkzeuganordnung 10 in einer Axialansicht, wobei in Fig. 2 das Schneidwerkzeug 18 sich in der Bearbeitungsposition BP befindet und wobei das Schneidwerkzeug 18 sich in Fig. 3 in der Durchführungsposition DP befindet.

Das Schneidwerkzeug 18 ist um die Verschwenkachse 20 innerhalb eines Winkelbereiches verschwenkbar, der vorzugsweise in einem Bereich von 5 bis 90° liegen kann, insbesondere in einem Bereich von 5° bis 25°. In der Bearbeitungsposition steht aufgrund des exzentrischen Verschwenkens des Schneidwerkzeuges 18 um die Verschwenkachse 20 herum ein erster Umfangsabschnitt 38 des Schneidwerkzeuges 18 gegenüber dem Schaftabschnitt 12 in radialer Richtung vor. Ein zweiter Umfangsabschnitt 40 des Schneidwerkzeuges 18 steht auch in der Bearbeitungsposition BP nicht gegenüber dem Schaftabschnitt 12 vor. In dem ersten Umfangsabschnitt 38 ist eine Bearbeitungsschneide 42 ausgebildet, die etwa radial ausgerichtet ist und der ein Spanraum 44 zugeordnet ist, der in der Drehrichtung des Drehantriebes 24 vor der Bearbeitungsschneide 42 angeordnet ist.

Durch den Verschwenkwinkel des Schneidwerkzeuges 18 gegenüber dem Schaftabschnitt 12 ergibt sich in dem Bereich der Bearbeitungsschneide 42 eine radiale Tiefe 46, um die der erste Umfangsabschnitt 38 im Bereich der Bearbeitungsschneide 42 radial gegenüber dem Schaftabschnitt 12 vorsteht. Diese radiale Tiefe 46 kann im Wesentlichen einer radialen Bearbeitungstiefe zur Bearbeitung der Umfangsränder 30, 32 entsprechen.

Fig. 2a zeigt eine vergrößerte Ansicht einer Schnittansicht entlang der Linie IIa-IIa der Fig. 2. Es ist zu erkennen, dass das Schneidwerkzeug 50 eine Werkzeugebene 50 aufweist, die quer zu der Längsachse 14 ausgerichtet ist und die vorzugsweise durch eine axiale Mitte des Schneidwerkzeuges 18 hindurch verläuft. Die Bearbeitungsschneide 42 weist einen ersten, dem Schaftabschnitt 12 zugewandten Schneidabschnitt 52 auf, der gegenüber der Werkzeugebene 50 unter einem Winkel α₁ geneigt ist, und weist eine zweite Schneidebene 54 auf, die auf der dem Schaftabschnitt 12 abgewandten Seite unter einem Winkel α₂ gegenüber der Werkzeugebene 50 geneigt ist. Vorzugsweise gilt α₁ = α₂. Die Winkel α₁, α₂ können insbesondere in einem Bereich von 20° bis 85° liegen.

Im Bereich der Werkzeugebene 50 weist das Schneidwerkzeug 50 den größten Außendurchmesser auf. In diesem Bereich bzw. in dem Bereich, der die Schneidabschnitte 52, 54 miteinander verbindet, ist an der Bearbeitungsschneide 42 ein abgerundeter Abschnitt 56 vorgesehen.

Fig. 1 zeigt ferner, dass die Werkzeuganordnung 10 mit dem Schneidwerkzeug 18 durch die Bohrung 28 hindurchführbar ist, derart, dass das Schneidwerkzeug sich anschließend auf der Blindseite befindet, wie es bei 18' und dem zugeordneten Schaftabschnitt 12' in Fig. 1 schematisch angedeutet ist. Durch die Federeinrichtung 22 wird das Schneidwerkzeug 18 nach dem Hindurchführen durch die Bohrung 28 wieder in die Bearbeitungsposition BP zurückversetzt, nachdem es aufgrund des Eingriffs der Winkelfläche 37b mit dem Umfangsrand 30 gegen die Kraft der Federeinrichtung 22 in die Durchführungsposition DP gedrückt worden ist, in der es durch die Bohrung 28 hindurchgeführt worden ist.

Das sich auf der Blindseite befindende Schneidwerkzeug 18' kann nach dem Durchführen durch die Bohrung in der Drehrichtung des Drehantriebs 24 angetrieben werden, um auf diese Weise den blindseitigen Umfangsrand 32 zu bearbeiten, wie es in Fig. 1 durch eine gestrichelte Linie dargestellt ist.

Hiernach kann der Drehantrieb 24 wieder abgeschaltet werden, und das Schneidwerkzeug kann wieder aus der Bohrung herausgezogen werden, wobei die dem Schaftabschnitt 12 zugewandte Winkelfläche 37a dafür sorgt, dass das Schneidwerkzeug 18 aus der Bearbeitungsposition BP gegen die Kraft der Federeinrichtung 22 in die Durchführungsposition DP verschwenkt wird.

Das Schneidwerkzeug 18 kann ausgehend aus der in Fig. 1 gezeigten Position ferner unmittelbar den sichtseitigen Umfangsrand 30 bearbeiten, wie es in Fig. 1 ebenfalls durch eine gestrichelte Linie angedeutet ist. Dies kann vor oder nach dem Bearbeiten des blindseitigen Umfangsrandes 32 erfolgen.

Durch die Maßnahme, die Bearbeitungsschneide zwischen den Schneidabschnitten 52, 54 mit einem abgerundeten Abschnitt 56 zu versehen, und vorzugsweise die Winkelflächen 37a, 37b ebenfalls über einen abgerundeten Abschnitt ineinander übergehen zu lassen, wird das Schneidwerkzeug beim Durchführen durch die Bohrung aus der Durchführungsposition zwar mittels der Feder 22 gegen den Innenumfang der Bohrung 28 gedrückt, ruft jedoch dort aufgrund der Abrundungen keine Beschädigungen hervor.

Die Winkel der Winkelflächen 37a, 37b sind vorzugsweise gleich den Winkeln α₁ bzw. α₂.

In Fig. 1 ist ferner bei 58 schematisch eine Radialnut 58 gezeigt, die in axialer Richtung zwischen den Umfangsrändern 30, 32 angeordnet ist. Auch die Ränder der Radialnut 58 lassen sich auf die beschriebene Art und Weise bearbeiten, wie es in Fig. 1 ebenfalls schematisch angedeutet ist.

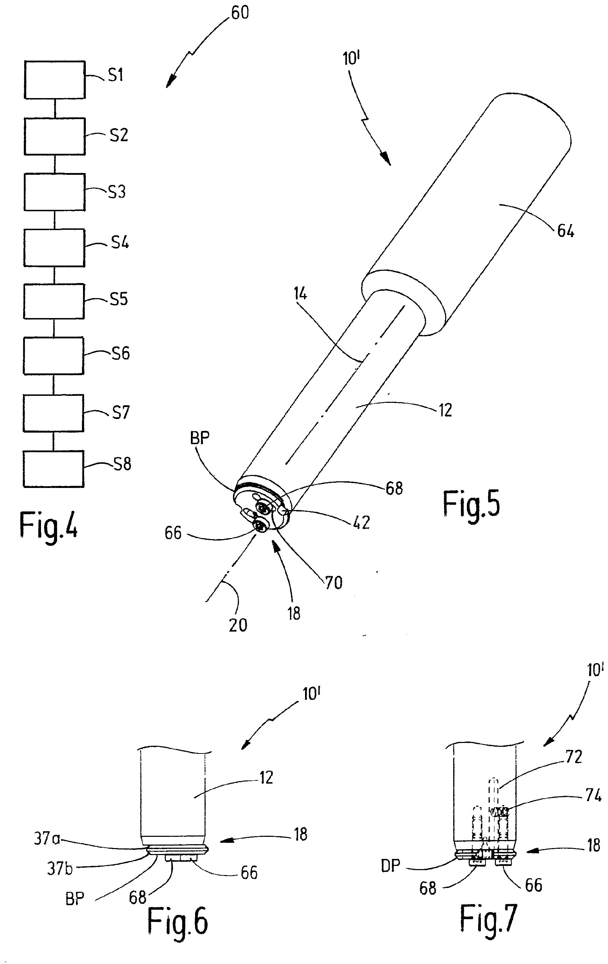

Ein bevorzugtes Verfahren zur Bearbeitung von einem oder zwei Umfangsrändern einer Bohrung ist in Fig. 4 mit 60 bezeichnet.

Vor dem Verfahren wird eine Werkzeuganordnung bereitgestellt, die einen durch die Bohrung hindurchführbaren Schaftabschnitt und ein an einer Stirnseite des Schaftabschnittes exzentrisch verschwenkbares Schneidwerkzeug aufweist, insbesondere eine Werkzeuganordnung der oben beschriebenen Art.

In einem Schritt S1 wird die Werkzeuganordnung auf das Werkstück zu bewegt, und zwar so, dass eine Längsachse des Schaftabschnittes mit einer Längsachse der Bohrung zusammenfällt, ohne hierbei die Werkzeuganordnung in einer Drehrichtung anzutreiben. In einem nachfolgenden Schritt S2 wird das Schneidwerkzeug in eine mit dem Schaftabschnitt im Wesentlichen fluchtende Position (Durchführungsposition) verschwenkt, und zwar aufgrund eines Kontaktes zwischen einem radial gegenüber dem Schaftabschnitt vorstehenden Umfangsabschnitt des Schneidwerkzeuges und einem sichtseitigen Umfangsrand der Bohrung. In einem Schritt S3 wird der Schaftabschnitt durch die Bohrung hindurchgeführt, bis das Schneidwerkzeug aus der Blindseite der Bohrung heraustritt. In einem Schritt S4 wird das Schneidwerkzeug in eine exzentrische Bearbeitungsposition verschwenkt (insbesondere mittels einer Federeinrichtung), und der Schaftabschnitt wird anschließend in Drehrichtung angetrieben. In einem Schritt S5 wird der blindseitige Umfangsrand der Bohrung bearbeitet, indem die Werkzeuganordnung entgegen der Durchführungsrichtung bewegt wird. In einem Schritt S6 wird der Drehantrieb des Schaftabschnittes 12 beendet, wobei der Schaftabschnitt vorzugsweise wieder leicht in Durchführungsrichtung bewegt wird. Nach dem Beenden des Drehantriebes wird der Schaftabschnitt wieder in die entgegengesetzte Richtung bewegt, so dass das Schneidwerkzeug in eine mit dem Schaftabschnitt im Wesentlichen fluchtende Position verschwenkt wird (S7), und zwar aufgrund eines Kontaktes zwischen einem radial gegenüber dem Schaftabschnitt vorstehenden Umfangsabschnitt des Schneidwerkzeuges und dem blindseitigen Umfangsrand der Bohrung.

Im Schritt S8 wird der Schaftabschnitt durch die Bohrung hindurchgeführt, bis das Schneidwerkzeug aus der Sichtseite der Bohrung heraustritt und das Verfahren beendet ist. Vor oder nach der Durchführung dieser Schritte kann auch der sichtseitige Umfangsrand der Bohrung bearbeitet werden.

In den Fig. 5 bis 11 ist eine weitere Ausführungsform einer Werkzeuganordnung 10' dargestellt, die hinsichtlich Aufbau und funktionsweise generell der Werkzeuganordnung 10 der Fig. 1 bis 3 entspricht. Gleiche Elemente sind daher durch gleiche Bezugszeichen gekennzeichnet. Im Folgenden werden im Wesentlichen die Unterschiede erläutert.

Die Werkzeuganordnung 10' weist an dem dem Schneidwerkzeug 18 gegenüberliegenden axialen Ende des Schaftabschnittes 12 ferner einen Einspannabschnitt 64 auf, der vorzugsweise einen größeren Durchmesser aufweist als der Schaftabschnitt 12.

Ferner ist die Verschwenkachse 20 gebildet durch eine erste Schraube 66, die durch ein kreisförmiges Loch in dem Schneidwerkzeug 18 hindurchgeführt und in eine Gewindebohrung eingeschraubt ist, die von der Stirnseite 16 des Schaftabschnittes ausgeht.

Ferner ist eine zweite Schraube 68 durch ein Langloch 70 in dem Schneidwerkzeug 18 hindurchgeführt. Die zweite Schraube 68 ist wiederum in die Stirnseite 16 des Schaftabschnittes 12 eingeschraubt und bildet gemeinsam mit dem Langloch 70 Anschläge zum Einrichten der Bearbeitungsposition und der Durchführungsposition. In Fig. 5 ist die Bearbeitungsposition BP gezeigt. Fig. 6 zeigt, dass das Schneidwerkzeug 18 Winkelflächen 37a, 37b aufweist, wie bei der vorherigen Ausführungsform, wobei die Winkelflächen nicht über eine Abrundung sondern über eine gerade, d.h. axial ausgerichtete Fläche ineinander übergehen.

Fig. 7 zeigt schematisch die Gewindelöcher in dem Schaftabschnitt 12 zur Aufnahme der Schrauben 66, 68. Ferner ist ein Federaufnahmeloch 72 gezeigt, das ebenfalls als axial verlaufendes Loch ausgebildet ist, das von der Stirnseite 16 ausgeht. Fig. 7 zeigt ferner ein Federfixierloch 74, das beabstandet von der Stirnseite 16 in radialer Richtung von dem Umfang des Schaftabschnittes 12 hin zu dem Federaufnahmeloch 72 verläuft.

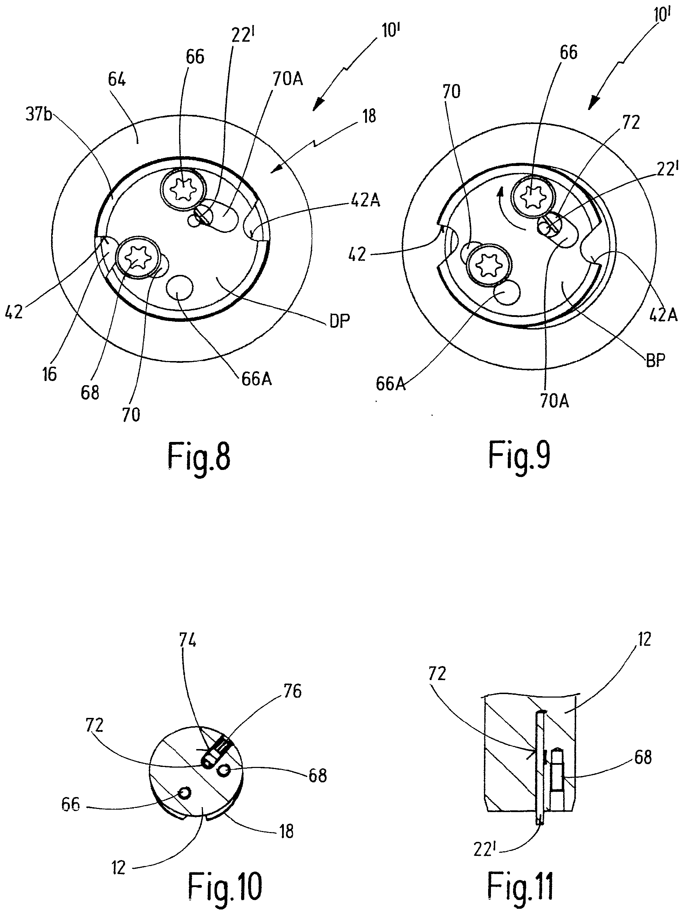

In das Federaufnahmeloch 72 kann eine Feder in Form eines Federdrahtes eingeführt sein, der über das Federfixierloch 74 fixierbar ist, beispielsweise mittels einer Madenschraube 76, wie sie in Fig. 10 angedeutet ist. Die hierdurch gebildete Federeinrichtung 22' (siehe Fig. 11) steht dann in axialer Richtung gegenüber der Stirnseite 16 vor und greift hierbei in eine Ausnehmung in dem Schneidwerkzeug 18, um die gewünschte Vorspannung in die Bearbeitungsposition BP zu erzielen.

Das Schneidwerkzeug 18 der Werkzeuganordnung 10' ist als Wende-Schneidwerkzeug 18 gebildet, das um eine quer zu der Längsachse 14 verlaufende Achse gewendet werden kann. In dem in der Bearbeitungsposition BP nicht gegenüber dem Schaftabschnitt 12 vorstehenden Umfangsabschnitt (siehe 40 in Fig. 2) ist an dem Schneidwerkzeug 18 eine weitere Bearbeitungsschneide 42 ausgebildet, die in Fig. 8 und 9 mit 42A bezeichnet ist. Das Schneidwerkzeug 18 weist ferner ein weiteres kreisrundes Loch 66A zur Aufnahme der ersten Schraube 66 auf, nachdem das Schneidwerkzeug gewendet worden ist. Ferner weist das Schneidwerkzeug 18 ein weiteres Langloch 70A auf. Die Position des Federaufnahmeloches 72 ist so gewählt, dass die Federeinrichtung 22' in das weitere Langloch 70A ragt, das folglich eine Wirkfläche für die Federeinrichtung 22' bildet, um das Schneidwerkzeug 18 in die Bearbeitungsposition BP vorzuspannen.

Nach dem Wenden wird die Schraube 68 in das weitere Langloch 70A geschraubt, und die Federeinrichtung 22' greift in das Langloch 70, durch das hindurch die Schraube 68 zuvor geschraubt war.

## Patentansprüche

1. Werkzeuganordnung (10) zum spanenden Bearbeiten von axial gegenüberliegenden Umfangsrändern (30, 32) einer Bohrung (28) in einem Werkstück (26), mit einem Schaftabschnitt (12), der entlang einer Längsachse (14) ausgerichtet ist und dessen Querschnitt (D1) dem Querschnitt (D2) der Bohrung (28) entspricht, so dass der Schaftabschnitt (12) mit Spiel durch die Bohrung (28) hindurchführbar ist, wobei der Schaftabschnitt (12) eine Stirnseite (16) aufweist, die quer zu der Längsachse (14) ausgerichtet ist, und mit einem Schneidwerkzeug (18), das eine Bearbeitungsschneide (42) aufweist und das an der Stirnseite (16) des Schaftabschnittes (12) um eine Verschwenkachse (20) zwischen einer Bearbeitungsposition (BP) und einer Durchführungsposition (DP) verschwenkbar ist, wobei die Verschwenkachse (20) radial versetzt zu der Längsachse (14) angeordnet ist, derart, dass das Schneidwerkzeug (18) in der Durchführungsposition (DP) im Wesentlichen mit dem Schaftabschnitt (12) ausgerichtet ist und dass die Bearbeitungsschneide (42) in der Bearbeitungsposition (BP) radial gegenüber dem Schaftabschnitt (12) vorsteht, **dadurch gekennzeichnet, dass** das Schneidwerkzeug (18) plattenförmig ausgebildet ist und dass die Bearbeitungsschneide (42) im Bereich eines Umfanges (38) des Schneidwerkzeugs (18) angeordnet ist.

2. Werkzeuganordnung nach Anspruch 1, mit einer Federeinrichtung (22), die das Schneidwerkzeug (18) in die Bearbeitungsposition (BP) vorspannt.

3. Werkzeuganordnung nach Anspruch 1 oder 2, wobei das Schneidwerkzeug (18) in einem Umfangsabschnitt (38), der in der Bearbeitungsposition (BP) gegenüber dem Schaftabschnitt (12) radial vorsteht, so geformt ist, dass sich das Schneidwerkzeug (18) durch Kontakt mit einem Umfangsrand (30, 32) der Bohrung (28) in die Durchführungsposition (DP) verschwenken lässt.

4. Werkzeuganordnung nach einem der Ansprüche 1 - 3, wobei die Bearbeitungsschneide (42) einen ersten Schneidabschnitt (52) und einen zweiten Schneidabschnitt (54) aufweist, die unter entgegengesetzten Winkeln (α₁, α₂) zu einer Werkzeugebene (50) ausgerichtet sind.

5. Werkzeuganordnung nach Anspruch 4, wobei der erste und der zweite Schneidabschnitt (52, 54) über einen abgerundeten Abschnitt (56) ineinander übergehen.

6. Werkzeuganordnung nach einem der Ansprüche 1 - 5, wobei in dem Schneidwerkzeug (18) ein axiales Langloch (70) ausgebildet ist, das exzentrisch zu der Längsachse (14) angeordnet ist und in das ein mit dem Schaftabschnitt (12) verbundener Stift (68) greift.

7. Werkzeuganordnung nach einem der Ansprüche 1 - 6, wobei das Schneidwerkzeug (18) in einem Umfangsabschnitt (40), der in der Bearbeitungsposition (BP) nicht gegenüber dem Schaftabschnitt (12) vorsteht, eine weitere Bearbeitungsschneide (42A) aufweist, und wobei das Schneidwerkzeug (18) gewendet an der Stirnseite (16) des Schaftabschnittes (12) montierbar ist, so dass die weitere Bearbeitungsschneide (42A) in der Bearbeitungsposition (BP) radial gegenüber dem Schaftabschnitt (12) vorsteht.

8. Werkzeuganordnung nach Anspruch 7, wobei das Schneidwerkzeug (18) zwei Langlöcher (70, 70A) aufweist, von denen jeweils eines Anschläge für die Bearbeitungsposition (BP) und die Durchführungsposition (DP) bildet und von denen das andere eine Wirkfläche für eine Federeinrichtung (22') bildet, die das Schneidwerkzeug (18) in die Bearbeitungsposition (BP) vorspannt.

9. Verfahren zum Bearbeiten eines Umfangsrandes (32) einer Bohrung (28) in einem Werkstück (26), insbesondere mittels einer Werkzeuganordnung (10) nach einem der Ansprüche 1 - 8, mit den Schritten:
- Bereitstellen einer Werkzeuganordnung (10), die einen durch die Bohrung (28) hindurchführbaren Schaftabschnitt (12) und ein an einer Stirnseite (16) des Schaftabschnittes (12) exzentrisch verschwenkbares Schneidwerkzeug (18) aufweist;
- Bewegen (S1) der Werkzeuganordnung (10) auf das Werkstück (26) zu, und zwar so, dass eine Längsachse (14) des Schaftabschnittes (12) mit einer Längsachse der Bohrung (28) zusammenfällt, ohne hierbei die Werkzeuganordnung (10) in einer Drehrichtung anzutreiben;
- Verschwenken (S2) des Schneidwerkzeuges (18) in eine mit dem Schaftabschnitt (12) im Wesentlichen fluchtende Position (DP), und zwar aufgrund eines Kontaktes zwischen einem radial gegenüber dem Schaftabschnitt (12) vorstehenden Umfangsabschnitt (38) des Schneidwerkzeuges (18) und einem sichtseitigen Umfangsrand (30) der Bohrung (28);
- Hindurchführen (S3) des Schaftabschnittes (12) durch die Bohrung (28), bis das Schneidwerkzeug (18) aus der Blindseite (28) der Bohrung heraustritt;
- Verschwenken (S4) des Schneidwerkzeuges (18) in eine exzentrische Bearbeitungsposition (BP) und Drehantreiben des Schaftabschnittes (12);
- Bearbeiten (S5) eines blindseitigen Umfangsrandes (32) der Bohrung (28), indem die Werkzeuganordnung (10) entgegen der Durchführungsrichtung bewegt wird; und
- Beenden (S6) des Drehantriebs des Schaftabschnittes (12).

## Claims

1. Tool arrangement (10) for the machining of axially opposed peripheral edges (30, 32) of a bore (28) in a work piece (26), comprising a shaft portion (12) which is aligned along a longitudinal axis (14) and whose cross-section (D1) corresponds to the cross-section (D2) of the bore (28), such that the shaft portion (12) can pass through the bore (28) with play, wherein the shaft portion (12) has an end face (16) which is aligned transversely to the longitudinal axis (14), and comprising a cutting tool (18) which has a machining cutting edge (42) and which can be pivoted at the end face (16) of the shaft portion (12) about a pivot axis (20) between a machining position (BP) and a pass-through position (DP), wherein the pivot axis (20) is arranged radially offset from the longitudinal axis (14) in such a way, that the cutting tool (18) in the pass-through position (DP) is substantially aligned with the shaft portion (12), and that the machining cutting edge (42) in the machining position (BP) protrudes radially with respect to the shaft portion (12),
**characterized in that** the cutting tool (18) is plate-shaped and **in that** the machining cutting edge (42) is arranged in a region of a periphery (38) of the cutting tool (18).

2. Tool arrangement according to claim 1, comprising a spring device (22) which prestresses the cutting tool (18) into the machining position (BP).

3. Tool arrangement according to claim 1 or 2, wherein the cutting tool (18) in a peripheral portion (38) which in the machining position (BP) protrudes radially with respect to the shaft portion (12), is formed such that the cutting tool (18) can be pivoted into the pass-through position (DP) by means of a contact with a peripheral edge (30, 32) of the bore (28).

4. Tool arrangement according to any of claims 1 - 3, wherein the machining cutting edge (42) comprises a first cutting portion (52) and a second cutting portion (54) which are arranged at opposite angles (α₁, α₂) with respect to a tool plane (50).

5. Tool arrangement according to claim 4, wherein the first and the second cutting portions (52, 54) merge by means of a rounded portion (56).

6. Tool arrangement according to any of claims 1 - 5, wherein an axial longitudinal hole (70) is formed in the cutting tool, which longitudinal hole (70) is arranged eccentrically with respect to the longitudinal axis (14) and into which a pin (68) engages, which pin is connected to the shaft portion (12).

7. Tool arrangement according to any of claims 1 - 6, wherein the cutting tool (18) in a circumferential portion (40) which in the machining position (BP) does not protrude with respect to the shaft portion (12), comprises a further machining cutting tool (42A), and wherein the cutting tool (18) can be mounted to the end face (16) of the shaft portion (12) in a turned around attitude, so that the further machining cutting edge (42A) in the machining position (BP) protrudes radially with respect to the shaft portion (12).

8. Tool arrangement according to claim 7, wherein the cutting tool (18) comprises two longitudinal holes (70, 70A), wherein one of the longitudinal holes (70, 70A) forms stops for the machining position (BP) and the pass-through position (DP) and wherein the other longitudinal hole forms an effective area for a spring device (22') which prestresses the cutting tool (18) into the machining position (BP).

9. A method for machining a peripheral edge (32) of a bore (28) in a work piece (26), particular by means of a tool arrangement (10) according to one the claims 1 - 8, comprising the steps of:
- providing a tool arrangement (10) which comprises a shaft portion (12) that can be passed through the bore (28) and a cutting tool (18) which can be eccentrically pivoted at an end face (16) of the shaft portion (12);
- moving (S1) the tool arrangement (10) towards the work piece (26), in such a way that a longitudinal axis (14) of the shaft portion (12) coincides with a longitudinal axis of the bore (28), without driving the tool arrangement (10) in one direction of rotation;
- pivoting (S2) the cutting tool (18) into a position (DP) which is essentially aligned with the shaft portion (12), due to of a contact between a peripheral portion (38) of the cutting tool (18), which protrudes radially with respect to the shaft portion (12), and a visible peripheral edge (30) of the bore (28);
- passing (S3) the shaft portion (12) through the bore (28) until the cutting tool (18) comes out of the blind side (28) of the bore;
- pivoting (S4) the cutting tool (18) into an eccentric machining position (BP) and rotary driving of the shaft portion (12);
- machining (S5) a blind side peripheral edge (32) of the bore (28), by moving the tool arrangement (10) opposite to the pass-through direction; and
- stopping (S6) the rotary driving of the shaft portion (12).

## Revendications

1. Agencement d'outil (10) pour l'usinage par enlèvement de copeaux de bords périphériques opposés axialement (30, 32) d'un alésage (28) dans une pièce (26), comprenant une portion d'arbre (12) qui est orientée le long d'un axe longitudinal (14) et dont la section transversale (D1) correspond à la section transversale (D2) de l'alésage (28), de telle sorte que la portion d'arbre (12) puisse être guidée à travers l'alésage (28), la portion d'arbre (12) présentant un côté frontal (16) qui est orienté transversalement à l'axe longitudinal (14), et comprenant un outil de coupe (18) qui présente un tranchant d'usinage (42) et qui peut pivoter au niveau du côté frontal (16) de la portion d'arbre (12) autour d'un axe de pivotement (20) entre une position d'usinage (BP) et une position de guidage (DP), l'axe de pivotement (20) étant disposé de manière décalée radialement par rapport à l'axe longitudinal (14) de telle sorte que l'outil de coupe (18) soit essentiellement aligné avec la portion d'arbre (12) dans la position de guidage (DP) et que le tranchant d'usinage (42) fasse saillie radialement par rapport à la portion d'arbre (12) dans la position d'usinage (BP), **caractérisé en ce que** l'outil de coupe (18) est réalisé en forme de plaque et **en ce que** le tranchant d'usinage (42) est disposé dans la région d'un pourtour (38) de l'outil de coupe (18).

2. Agencement d'outil selon la revendication 1, comprenant un dispositif de ressort (22) qui précontraint l'outil de coupe (18) dans la position d'usinage (BP).

3. Agencement d'outil selon la revendication 1 ou 2, dans lequel l'outil de coupe (18), dans une portion périphérique (38) qui fait saillie radialement dans la position d'usinage (BP) par rapport à la portion d'arbre (12), est formé de telle sorte que l'outil de coupe (18) puisse pivoter dans la position de guidage (DP) par contact avec un bord périphérique (30, 32) de l'alésage (28).

4. Agencement d'outil selon l'une quelconque des revendications 1 à 3, dans lequel le tranchant d'usinage (42) présente une première portion de coupe (52) et une deuxième portion de coupe (54) qui sont orientées suivant des angles opposés (α1, α2) pour former un plan d'outil (50).

5. Agencement d'outil selon la revendication 4, dans lequel la première et la deuxième portion de coupe (52, 54) se prolongent l'une dans l'autre par le biais d'une portion arrondie (56).

6. Agencement d'outil selon l'une quelconque des revendications 1 à 5, dans lequel un trou oblong axial (70) est réalisé dans l'outil de coupe (18) et est disposé de manière excentrique par rapport à l'axe longitudinal (14) et dans lequel s'engage une goupille (68) connectée à la portion d'arbre (12).

7. Agencement d'outil selon l'une quelconque des revendications 1 à 6, dans lequel l'outil de coupe (18), dans une portion périphérique (40) qui ne fait pas saillie par rapport à la portion d'arbre (12) dans la position d'usinage (BP), présente un tranchant d'usinage supplémentaire (42A), et dans lequel l'outil de coupe (18) peut être monté de manière tournée au niveau du côté frontal (16) de la portion d'arbre (12) de telle sorte que le tranchant d'usinage supplémentaire (42A) fasse saillie radialement par rapport à la portion d'arbre (12) dans la position d'usinage (BP).

8. Agencement d'outil selon la revendication 7, dans lequel l'outil de coupe (18) présente deux trous oblongs (70, 70A), dont à chaque fois l'un forme des butées pour la position d'usinage (BP) et la position de guidage (DP) et dont l'autre forme une surface active pour un dispositif de ressort (22') qui précontraint l'outil de coupe (18) dans la position d'usinage (BP).

9. Procédé d'usinage d'un bord périphérique (32) d'un alésage (28) dans une pièce (26), en particulier au moyen d'un agencement d'outil (10) selon l'une quelconque des revendications 1 à 8, comprenant les étapes suivantes :
- fourniture d'un agencement d'outil (10) qui présente une portion d'arbre (12) pouvant être guidée à travers l'alésage (28) et un outil de coupe (18) pouvant pivoter de manière excentrique au niveau d'un côté frontal (16) de la portion d'arbre (12) ;
- déplacement (S1) de l'agencement d'outil (10) vers la pièce (26) et ce de telle sorte qu'un axe longitudinal (14) de la portion d'arbre (12) coïncide avec un axe longitudinal de l'alésage (28), sans pour cela entraîner l'agencement d'outil (10) dans un sens de rotation ;
- pivotement (S2) de l'outil de coupe (18) dans une position (DP) essentiellement alignée avec la portion d'arbre (12), et ce sur la base d'un contact entre une portion périphérique (38) de l'outil de coupe (18) faisant saillie radialement par rapport à la portion d'arbre (12) et un bord périphérique (30) du côté visible de l'alésage (28) ;
- guidage (S3) de la portion d'arbre (12) à travers l'alésage (28) jusqu'à ce que l'outil de coupe (18) sorte du côté aveugle (28) de l'alésage ;
- pivotement (S4) de l'outil de coupe (18) dans une position d'usinage excentrique (BP) et entraînement en rotation de la portion d'arbre (12) ;
- usinage (S5) d'un bord périphérique (32) du côté aveugle de l'alésage (28), en ce que l'agencement d'outil (10) est déplacé à l'encontre de la direction de guidage; et
- achèvement (S6) de l'entraînement en rotation de la portion d'arbre (12).
